# EUROPÄISCHE PATENTANMELDUNG

(11) **EP 3 879 377 A1**
(43) Veröffentlichungstag der Anmeldung: **15.09.2021**
(21) Anmeldenummer: 20161839.4
(22) Anmeldetag: 09.03.2020
(51) Int. Cl.: G05G 1/04, E02F 9/20, G05G 9/047, G05G 25/04, E01C 19/48

(54) **FAHRJOYSTICKANORDNUNG FÜR EINE BAUMASCHINE**

(71) Anmelder: Joseph Vögele AG, 67067 Ludwigshafen (DE)
(72) Erfinder: EUL, Achim, 68305 Mannheim (DE); JUNGMANN, Karl-Heinz, 68647 Biblis (DE)
(74) Vertreter: Grünecker Patent- und Rechtsanwälte PartG mbB

(57) **Zusammenfassung**

Fahrjoystickanordnung (1) für eine Baumaschine (47) umfassend einen Bedienhebel (5) und ein Basisgehäuse (3), wobei der Bedienhebel (5) schwenkbar in dem Basisgehäuse (3) gelagert ist, und das Basisgehäuse (3) eine Schaltkulisse (15) aufweist, durch welche sich der Bedienhebel (5) erstreckt. Der Bedienhebel (5) weist zumindest abschnittsweise ein Material (43) auf, welches dazu geeignet und derart in dem Bedienhebel (5) angeordnet ist, dass eine Stellung des Bedienhebels (5) relativ zum Basisgehäuse (3) mittels eines Hall-Sensors (35) detektierbar ist.

## Beschreibung

Die vorliegende Erfindung betrifft eine Fahrjoystickanordnung, ein Bedienpanel für eine Baumaschine, sowie eine Baumaschine selbst.

Zum Bedienen von Baumaschinen sind zumeist Bedienpanels oder -konsolen vorgesehen, welche neben Schaltern und Knöpfen auch Bedienhebel, sogenannte Joysticks, umfassen. Die Joysticks können zum Steuern von Werkzeugen der Baumaschine, wie einer Baggerschaufel, oder zum Bewegen und Fahren der Baumaschine verwendet werden. Die Joysticks können zumeist die Richtung sowie die absolute Strecke ihrer Auslenkung, in einigen Varianten auch eine Stärke gegen eine mechanische Widerstandskraft, erfassen. Je nach Art des Joysticks sind unterschiedliche Freiheitsgrade zur Auslenkung möglich. Häufig sind Bedienpanels mit Joysticks auf einem Bedienstand einer Baumaschine angeordnet, wobei der Bedienstand zwar überdacht aber oft nicht gänzlich abgeschlossen ist. So ist der Joystick auch Umwelt- und Witterungseinflüssen ausgesetzt.

Aufgabe der vorliegenden Erfindung ist es, eine zuverlässige und gegen äußere Einflüsse robuste Fahrjoystickanordnung bereitzustellen.

Die Aufgabe wird gelöst durch eine Fahrjoystickanordnung mit den Merkmalen des Anspruchs 1, ein Bedienpanel gemäß Anspruch 11 sowie eine Baumaschine gemäß Anspruch 14. Vorteilhafte Weiterbildungen der Erfindung sind in den Unteransprüchen angegeben.

Eine erfindungsgemäße Fahrjoystickanordnung für eine Baumaschine (d.h. Joystickanordnung zum Bedienen oder Ansteuern eines Fahrantriebs der Baumaschine) umfasst einen Bedienhebel und ein Basisgehäuse, wobei der Bedienhebel schwenkbar in dem Basisgehäuse gelagert ist, und das Basisgehäuse eine Schaltkulisse aufweist, durch welche sich der Bedienhebel erstreckt. Der Bedienhebel weist zumindest abschnittsweise, insbesondere an einem dem Basisgehäuse zugewandten Abschnitt, ein Material auf, welches dazu geeignet und derart in dem Bedienhebel angeordnet ist, dass eine Stellung des Bedienhebels relativ zum Basisgehäuse mittels eines Hall-Sensors detektierbar ist. So wird die Auslenkung des Bedienhebels von dem Hall-Sensor in elektrische Signale übersetzt, welche an eine elektronische Steuerung der Baumaschine weitergeleitet werden. Hall-Sensor und Bedienhebel sind dabei berührungslos zueinander gelagert und es sind keine elektrischen oder mechanischen Sensoren am Bedienhebel selbst notwendig. Somit kann der Hall-Sensor in einem Bedienpanel der Baumaschine luft- und wasserdicht gekapselt und die Fahrjoystickanordnung auf diesem Bedienpanel aufgesetzt sein. Ein Eindringen von Wasser und Schmutz in die Fahrjoystickanordnung, was aufgrund der Beweglichkeit von Bedienhebel in Bezug auf das Basisgehäuse prinzipiell möglich ist, hat somit keine Auswirkung mehr auf die Funktionsfähigkeit der Fahrjoystickanordnung, da keinerlei zur Umgebung offene elektronische Bauteile oder Anschlüsse vorhanden sind. Entsprechend einfacher und kostengünstiger ist auch die Fertigung und Montage der Fahrjoystickanordnung, auch da keine Abdeckung und Isolierung von Anschlüssen nötig ist.

Zweckmäßig weist der Bedienhebel zumindest abschnittsweise ein ferromagnetisches und/oder magnetisches Material auf. In der ersten Variante bewirkt die Bewegung des ferromagnetischen Materials eine Änderung des magnetischen Feldes eines mit dem Hall-Sensor gekapselten Magneten. Dazu kann der Bedienhebel beispielsweise ein Zackenmuster, ähnlich dem eines Zahnrads, aufweisen. In der zweiten Variante können beispielsweise Magnete in abwechselnd zueinander vertauschter Orientierung in dem Bedienhebel angeordnet sein, wobei der Hall-Sensor die Bewegung dieser Magnete erfasst.

Idealerweise ist der Bedienhebel von einer Nullposition zu zwei Seiten hin schwenkbar. Damit ist die Fahrjoystickanordnung insbesondere als Fahrhauptschalter für eine Baumaschine, beispielsweise einen Straßenfertiger oder Beschicker, geeignet, da die Fahrtrichtung nach vorne und hinten bestimmt werden kann. Die Größe der Auslenkung bzw. des Drehwinkels des Bedienhebels wird dann proportional in eine Geschwindigkeit umgerechnet. Die mittige Nullposition entspricht einem Fahrstopp.

In einer vorteilhaften Variante weist die Fahrjoystickanordnung einen Verriegelungsmechanismus auf, welcher eine Bewegung des Bedienhebels aus einer Nullposition heraus oder über diese hinweg verhindert. Zudem weist der Bedienhebel einen Entriegelungsknopf auf, mittels welchem der Verriegelungsmechanismus entriegelbar ist. So kann nicht ungewollt durch ein Anstoßen des Bedienhebels oder durch falsche Bedienung die Baumaschine ruckartig ihre Fahrtrichtung ändern bzw. in Fahrt gesetzt werden. Somit werden umstehende Personen vor einer Kollision, aber auch der Bediener der Baumaschine vor einem Herabfallen geschützt. Zudem wird ein Motor vor Beschädigung geschützt.

Bevorzugt weist der Bedienhebel einen Vorsprung und das Basisgehäuse eine Nut auf oder umgekehrt, so dass beide in einer Nullposition des Bedienhebels in Eingriff kommen, und ein Bewegen des Bedienhebels aus der Nullposition oder über diese hinweg gegen einen mechanischen Widerstand erfolgt. Damit kann ein Bediener den Bedienhebel in die Nullposition schieben und spürt dort einen Einrasteffekt, wodurch er z.B. sicher sein kann, dass die Baumaschine stillsteht. Damit ist es auch möglich, den Bedienhebel in die Nullposition zu schieben ohne dabei den Blick auf die Fahrjoystickanordnung gerichtet zu haben.

In einer zweckmäßigen Variante umfasst die Fahrjoystickanordnung eine Reibbremse, welche die jeweilige Position des Bedienhebels arretiert. Der Bedienhebel weist also auch beim Bewegen außerhalb der Nullposition einen Widerstand auf, sodass der Bedienhebel mit angenehmer Kraft bewegt werden kann und die jeweilige Position, welche einer Fahrtrichtung und -geschwindigkeit entsprechen kann, beim Loslassen beibehält. In anderen Varianten, wenn die Fahrjoystickanordnung zum Beispiel nicht als Fahrhauptschalter verwendet wird, ist es jedoch auch möglich, einen Federmechanismus vorzusehen, welcher den Bedienhebel automatisch in die Nullposition zurückbewegt.

Vorzugsweise ist der Bedienhebel am Basisgehäuse austauschbar. So können verschiedene Design- und Ergonomievarianten realisiert werden. Insbesondere können auch nur die sichtbaren Teile des Bedienhebels austauschbar sein.

In einer bevorzugten Variante weist die Fahrjoystickanordnung eine Öffnung auf, welche den Abfluss von in die Fahrjoystickanordnung eingedrungenem Wasser ermöglicht. Sinnvollerweise ist die Öffnung im untersten Bereich beispielsweise an einer Unterkante des Basisgehäuses ausgebildet. So kann ggf. durch die Schaltkulisse eingedrungenes Wasser vollständig wieder abfließen und es müssen keine aufwändigen Vorkehrungen, wie beispielsweise eine Abdeckung der Schaltkulisse mit einer Manschette, getroffen werden, um das Eindringen des Wassers zu verhindern, zumal diese bislang getroffenen Maßnahmen erfahrungsgemäß nicht vollständig wirksam sind.

In einer weiteren vorteilhaften Variante weist das Basisgehäuse einen zumindest im Wesentlichen kreisbogenförmigen, die Schaltkulisse umgebenden Abschnitt auf und der Bedienhebel weist einen die Schaltkulisse zumindest teilweise überlappenden oberen Teil auf, welcher einen entsprechenden kreisbogenförmigen Abschnitt aufweist. So kann der Bedienhebel insbesondere um eine einzige Achse drehbar gelagert sein. Da Bedienhebel und Basisgehäuse sich gegenüberliegende kreisbogenförmige Abschnitte haben, bleibt ein gegebenenfalls vorhandener Abstand bzw. Spalt zwischen beiden auch bei der Auslenkung des Bedienhebels stets gleich groß. Es ist jedoch auch denkbar, Materialien zu wählen, so dass ein leichtes Aneinanderschleifen möglich ist.

In einer Variante ist ein sich innerhalb des Basisgehäuses erstreckender Abschnitt des Bedienhebels derart geformt, um an der Schaltkulisse von unten anzuliegen und diese in jeder Stellung des Bedienhebels von unten abzudecken. Dieser Abschnitt kann dabei groß genug sein, um die Schaltkulisse in jeder Auslenkung des Bedienhebels zu verdecken. Dazu kann der Abschnitt des Bedienhebels z.B. als Kreiszylinder(-teil) geformt sein. Ebenso ist es denkbar, lediglich flache, flexible Abschnitte oder Laschen an dem Bedienhebel anzuordnen, welche die Schaltkulisse von unten abdecken, und dabei beispielsweise flexibel mit einer gewissen Vorspannung gegen diese drücken. Somit hinterlässt die Schaltkulisse keine größeren Öffnungen und ein Eindringen von größeren Schmutzpartikeln ist verhindert.

Denkbar ist es, dass sich der innerhalb des Basisgehäuses erstreckende und von unten an der Schaltkulisse anliegende Abschnitt des Bedienhebels die Form eines Abschnittes eines Zylindermantels aufweist. Denkbar ist auch, dass der betreffende Abschnitt des Bedienhebels einen in die Schaltkulisse hineinragenden und im Wesentlichen oder nahezu die gesamte Breite der Schaltkulisse ausfüllenden Vorsprung aufweist. Dies bewirkt zum einen eine noch sicherere, stabilere Führung des Bedienhebels relativ zum Basisgehäuse. Zum anderen verringert sich durch das zumindest teilweise Ausfüllen der Schaltkulisse die Neigung zur Ansammlung von Verschmutzung. Für letzteren Zweck wäre es ideal, wenn die Außenseite des Vorsprungs fluchtend ist oder mit nur minimalem Versatz von beispielsweise weniger als 4 mm niedriger liegt als die zur Schaltkulisse benachbarten Bereiche des Basisgehäuses.

Ein erfindungsgemäßes Bedienpanel umfasst ein Panelgehäuse und eine auf dem Panelgehäuse angeordnete Fahrjoystickanordnung gemäß einer der oben beschriebenen Varianten. Das Panelgehäuse weist in einem Innenraum den Hall-Sensor auf, welcher dazu konfiguriert ist, die Stellung des Bedienhebels der Fahrjoystickanordnung berührungslos zu erfassen. Das Bedienpanel kann weitere Bedienelemente wie Druckknöpfe oder Schalter sowie Anzeigeinstrumente umfassen. Zudem können mehrere Fahrjoystickanordnungen auf dem Bedienpanel angeordnet sein. Das Bedienpanel, und somit der Hall-Sensor, ist luft- und wasserdicht verschlossen, und es bestehen keine Leitungsverbindungen zu der Fahrjoystickanordnung. Lediglich die Veränderung der magnetischen Feldstärke wird durch das Panelgehäuse hindurch von dem Hall-Sensor wahrgenommen. Da die Fahrjoystickanordnung aufgrund ihrer beweglichen Teile ein möglicher Eintrittspunkt für Wasser ist, erfindungsgemäß aber keine Verbindung zum Inneren des Panelgehäuses und den darin befindlichen elektronischen Bauteilen besteht, bleibt die Funktionsfähigkeit des elektronischen Bedienpanels stets unbeeinträchtigt.

Vorzugsweise ist die Fahrjoystickanordnung an dem Panelgehäuse austauschbar, insbesondere anschraubbar, ein- oder aufsteckbar. So können unterschiedliche Design- und Ergonomievarianten verwendet werden, oder im Falle einer Beschädigung die Fahrjoystickanordnung ausgetauscht werden. Buchsen mit Innenschraubgewinde oder für Steckverbindungen können dazu in dem Panelgehäuse ausgeformt sein, jedoch ohne Verbindung zum Inneren des Bedienpanels, um die Dichtigkeit zu erhalten. Dies kann beispielsweise durch Gießen aus einem Kunststoffmaterial des ansonsten wie üblich dünnen Panelgehäuses mit entsprechend dickeren Bereichen erfolgen. Es ist jedoch auch denkbar, die Fahrjoystickanordnung mittels Klebung, insbesondere Heißklebung, zu befestigen, wobei diese Klebung beispielsweise mittels Heißluftföhn auch wieder lösbar sein kann.

In einer bevorzugten Variante weist das Bedienpanel eine Ausnehmung an bzw. in dem Panelgehäuse auf, in welche der Fahrjoystickanordnung zumindest teilweise positionierbar ist. So kann das Basisgehäuse vorteilhaft abgesenkt sein, so dass nur die Schaltkulisse und der Bedienhebel über eine ebene Fläche des Bedienpanels hinausstehen. Dies ist für einen Bediener besonders angenehm, da so die Hand gut abgelegt werden kann. Außerdem ist so das Bedienpanel optisch ansprechender. Zudem dient die Ausnehmung als Positionierhilfe. Die Ausnehmung kann dabei als tiefgezogener Abschnitt des Panelgehäuses gestaltet sein, jedoch weiterhin ohne Verbindung oder Durchbrechung zum Inneren des Bedienpanels.

Eine erfindungsgemäße Baumaschine umfasst eine elektronische Steuerung und ein Bedienpanel wie oben beschrieben, wobei der Hall-Sensor des Bedienpanels elektrische Signale in Abhängigkeit der erfassten Stellung des Bedienhebels an die elektronische Steuerung sendet, und die elektronische Steuerung dazu konfiguriert ist, Funktionen der Baumaschine, insbesondere eine Fahrrichtung und eine Fahrgeschwindigkeit, in Abhängigkeit der von dem Hall-Sensor erhaltenen Signale zu steuern. Insbesondere kann so die Drehzahl eines Hauptantriebs, beispielsweise eines Dieselmotors, sowie das Einlegen eines geeigneten Ganges, gesteuert werden. Denkbar ist jedoch auch die Steuerung von Hydraulikkomponenten oder Elektromotoren.

Bevorzugt ist die Baumaschine ein Straßenfertiger oder Beschickerfahrzeug. Eine Fahrjoystickanordnung der oben beschriebenen Art ist hier besonders als Fahrhauptschalter (d.h. als Bedienelement zum Steuern des Fahrantriebs der Baumaschine) gut geeignet, da die Baumaschine im Einbaubetrieb zumeist mit gleichbleibender und niedriger Geschwindigkeit bewegt wird.

Im Folgenden werden Ausführungsbeispiele der Erfindung anhand der Figuren näher beschrieben. Dabei zeigen
- Figur 1:: eine perspektivische Ansicht einer ersten Ausführungsform einer Fahrjoystickanordnung,
- Figur 2:: eine perspektivische seitliche Ansicht der Fahrjoystickanordnung,
- Figur 3:: eine Schnittansicht der Fahrjoystickanordnung mit einem Verriegelungsmechanismus in Sperrzustand,
- Figur 4:: eine Schnittansicht der Fahrjoystickanordnung mit Verriegelungsmechanismus und betätigtem Entriegelungsknopf,
- Figur 5:: eine Explosionszeichnung der Fahrjoystickanordnung,
- Figur 6:: eine Draufsicht eines Bedienpanels mit Fahrjoystickanordnung,
- Figur 7:: eine schematische Ansicht einer Baumaschine in Form eines Straßenfertigers mit Bedienpanel mit Fahrjoystickanordnung, und
- Figur 8:: eine perspektivische Ansicht der Fahrjoystickanordnung.

Einander entsprechende Komponenten sind in den Figuren jeweils mit gleichen Bezugszeichen versehen.

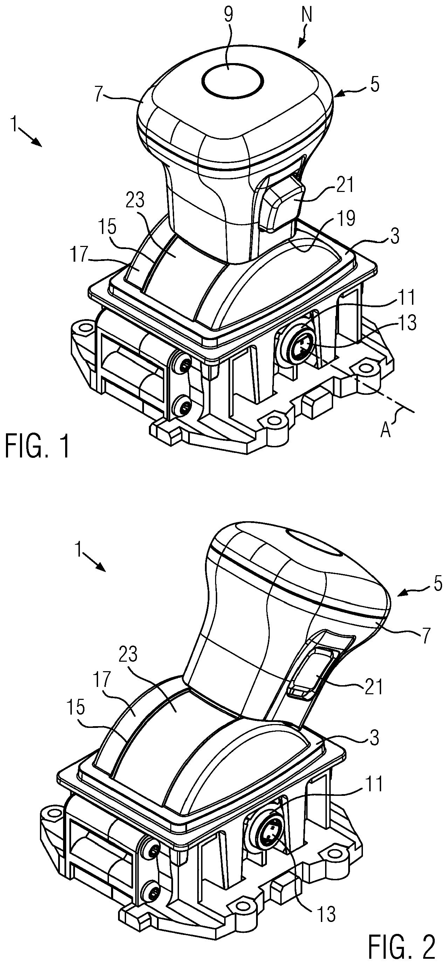

Figur 1 zeigt eine erste Ausführungsform einer Fahrjoystickanordnung 1 mit in einem Basisgehäuse 3 schwenkbar angeordneten Bedienhebel 5. Der Bedienhebel 5 weist einen oberen Teil 7 in Form einer Kappe auf, welcher mit einem inneren Hauptteil des Bedienhebels 5 beispielsweise über eine Schraube 9 oder einen Clip verbunden und somit auch abnehmbar ist. Der Bedienhebel 5 ist drehbar/schwenkbar um eine Achse A gelagert, wofür beispielsweise seitliche zylinderförmige Zapfen 11 in entsprechenden Ausnehmungen 13 des Basisgehäuses 3 gelagert sein können. Der Bedienhebel 5 befindet sich in der gezeigten Abbildung in einer Nullposition N und ist beidseitig aus dieser innerhalb einer Schaltkulisse 15 auslenkbar. Die Schaltkulisse 15, bzw. ein die Schaltkulisse 15 umgebender oberer Abschnitt 17 des Basisgehäuses 3, ist kreisbogenförmig gewölbt. Die Kappe 7 weist einen entsprechend geformten unteren Abschnitt 19 auf, so dass zwischen Kappe 7 und dem oberen Abschnitt 17 des Basisgehäuses 3 ein konstanter Abstand vorhanden ist. Seitlich am Bedienhebel 5 ist ein Entriegelungsknopf 21 angeordnet, welcher nach Innen gedrückt werden kann, um einen Verriegelungsmechanismus, der die Bewegung des Bedienhebels 5 aus der oder über die Nullposition N sperrt, zu lösen. Der Bedienhebel 5 weist zudem einen inneren Abschnitt 23 auf, welcher ebenfalls zumindest abschnittsweise kreisbogenförmig ist und die Schaltkulisse 15 in jeder Stellung des Bedienhebels 5 von innen abdeckt.

Figur 2 zeigt die Fahrjoystickanordnung 1 in einer seitlichen Ansicht, wobei der Bedienhebel 5 aus der Nullposition N nach vorne ausgelenkt ist. Der Entriegelungsknopf 21 befindet sich in einer entriegelten, nach innen gedrückten Position. Der innere Abschnitt 23 deckt auch in dieser ausgelenkten Position des Bedienhebels 5 die Schaltkulisse 15 von unten ab, so dass das Eindringen von größeren Schmutzpartikeln verhindert wird. Der Bedienhebel 5 ist mittels zylindrischer Zapfen 11 drehbar in den Ausnehmungen 13 des Basisgehäuses 3 gelagert.

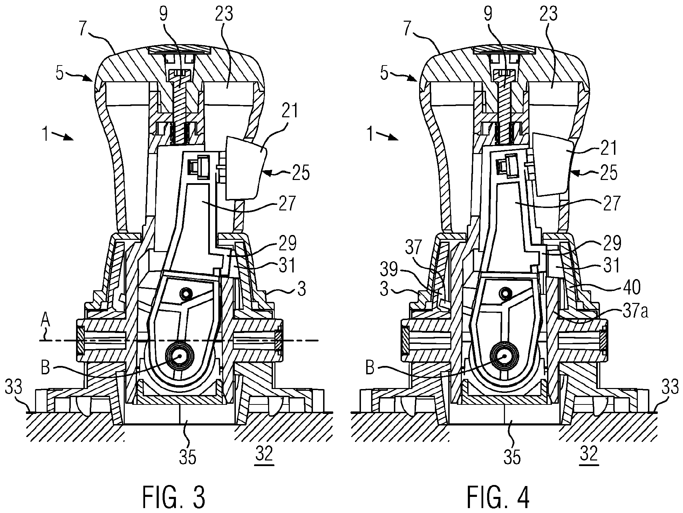

Figur 3 zeigt eine mittige Schnittansicht der Fahrjoystickanordnung 1 mit einem Verriegelungsmechanismus 25 in einem Sperrzustand. Der Verriegelungsmechanismus 25 umfasst einen mit dem Bedienhebel 5 um die Achse A drehbaren Sperrhebel 27, der sich üblicherweise auch zumindest abschnittsweise durch den Bedienhebel 5 erstreckt. Der Sperrhebel 27 ist zusätzlich quer zur Drehrichtung des Bedienhebels 5 um eine Achse B drehbar. Um den gesperrten Zustand automatisch vorzusehen, ist der Sperrhebel 27 mit einer Feder nach Außen vorgespannt. In der gezeigten Abbildung wird der Sperrhebel 27 damit nach rechts gedrückt, so dass der Entriegelungsknopf 21 nach Außen über die Kappe 7 hinaussteht. An dem Sperrhebel 27 ist eine Nase 29 ausgebildet, welche in der Nullposition mit einem Vorsprung 31 des Basisgehäuses 3 in Eingriff kommt, wodurch der Sperrhebel 27 und der Bedienhebel 5 nicht aus der Nullposition N bewegt werden können. Durch Drücken des Entriegelungsknopfes 21 nach links gegen die Federspannung wird der Verriegelungsmechanismus 25 gelöst. In einem Innenraum 32 eines Bedienpanels 33 ist ein Hall-Sensor 35 so angeordnet, dass er von unten ausreichend nah an dem Bedienhebel 5 positioniert ist, um dessen Bewegung oder Position zu detektieren. Des Weiteren ist in dieser Abbildung zu erkennen, dass der obere Teil bzw. die Kappe 7 des Bedienhebels 5 mit dem inneren Teil 23 des Bedienhebels 5 durch die Schraube 9 lösbar verbunden ist.

Figur 4 entspricht der Fahrjoystickanordnung 1 von Figur 3, jedoch mit entriegeltem Verriegelungsmechanismus 25. Dazu wurde der Entriegelungsknopf 21 nach links bzw. innen gedrückt, so dass der Sperrhebel 27 sich um die Achse B nach links dreht und die Nase 29 nicht mehr mit dem Vorsprung 31 des Basisgehäuses 3 überlappt. Somit kann der Bedienhebel 5 aus der Nullposition heraus um die Achse A, also vor und zurück, bewegt werden. Der Vorsprung 31 kann dazu zweckmäßig über die gesamte Bewegungsstrecke des Bedienhebels 5 an der Innenseite des Basisgehäuses 3, vollflächig oder als kreisbogenförmiger Abschnitt, ausgebildet sein, so dass die Nase 29 außerhalb der Nullposition an dem Vorsprung 31 entlang läuft, wobei der Entriegelungsknopf 21 gemäß Figur 2 in der Kappe 7 versenkt bleibt. An der Nullposition N, also in mittiger Stellung, weist der Vorsprung 31 also eine Aussparung auf, so dass dort aufgrund der Federvorspannung die Nase 29 in diese Aussparung einrastet. So kann erst zusammen mit erneutem Drücken des Entriegelungsknopfes 21 der Bedienhebel 5 wieder aus der Nullposition N heraus bewegt werden.

Um auch bei gedrücktem Entriegelungsknopf 21 eine mechanische Rückmeldung in Form eines leichten Einrastens beim Durchfahren der Nullposition N zu erhalten, kann der Bedienhebel 5 einen weiteren Vorsprung 37 aufweisen, welcher mit einer Nut 39 an einer Innenseite des Basisgehäuses 3 in Eingriff kommt. Der Vorsprung 37 kann beispielsweise als halbkreisförmiger Noppen, und die Nut 39 entsprechend komplementär geformt sein. So können diese durch leichten Kraftaufwand und aufgrund einer geringen Verformbarkeit der Komponenten, wie beispielsweise des Basisgehäuses 3, wieder voneinander gelöst werden. Ein zweiter Vorsprung 37a, welcher beispielsweise an einer gegenüberliegenden Seite des Bedienhebels 5 angeordnet sein kann, oder aber auch der erste Vorsprung 37 selbst, kann zusätzlich auch während der gesamten Drehbewegung des Bedienhebels 5 an einem inneren Abschnitt 40 des Basisgehäuses 3, einer sogenannten Reibbremse 40, mit Kontakt entlanglaufen, so dass zur Bewegung des Bedienhebels 5 stets eine die Reibung überwindende Kraft aufgewendet werden muss. So behält der Bedienhebel 5 auch beim Loslassen seine Position bei.

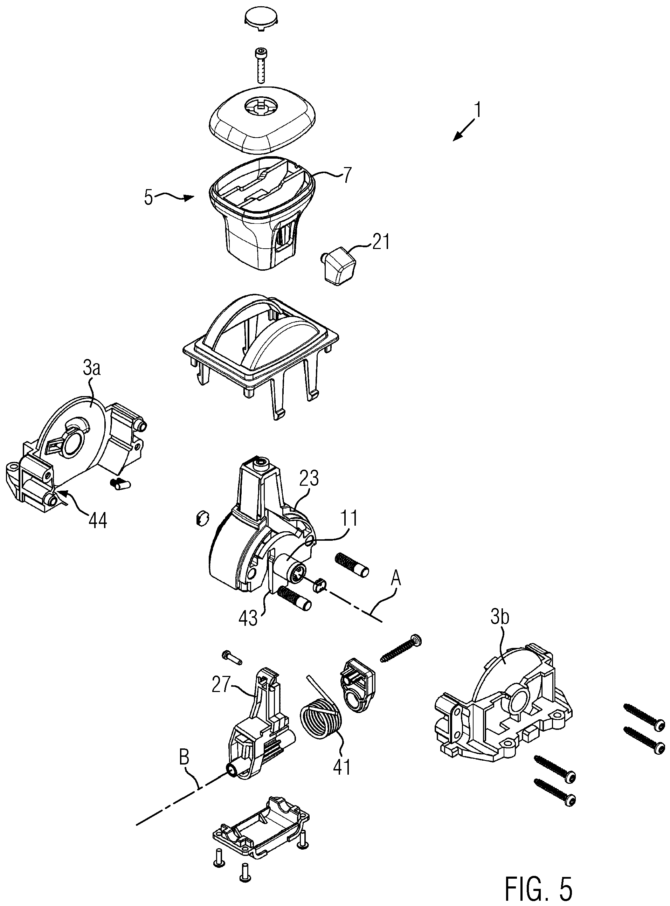

Figur 5 zeigt die einzelnen Komponenten der Fahrjoystickanordnung 1 als Explosionszeichnung. Der Bedienhebel 5, wie in den Figuren 1 bis 4 gezeigt, umfasst den oberen Teil bzw. die Kappe 7 und den inneren Abschnitt 23 mit den beidseitig angeordneten zylinderförmigen Zapfen 11. Der innere Abschnitt 23 des Bedienhebels 5 ist mittels der zylinderförmigen Zapfen 11 um die Achse A drehbar in den seitlichen Teilen 3a, 3b des Basisgehäuses 3 gelagert. Der Bedienhebel 5 erstreckt sich durch den oberen Abschnitt 17 des Basisgehäuses 3 hindurch. Innerhalb des inneren Abschnitts 23 des Bedienhebels 5 ist der Sperrhebel 27 sowie mittels einer Feder 41 der Entriegelungsknopf 21 zusätzlich um die Achse B drehbar gelagert. Die Feder 41 sorgt dabei für die Vorspannung des Knopfes 21 nach Außen entsprechend der Position in Figur 3. An einer unteren Seite des inneren Abschnitts 23 ist ein geeignetes Material 43, beispielsweise magnetische oder ferromagnetische Strukturen 43 angeordnet, dessen Bewegung beim Drehen des Bedienhebels 5 von dem Hall-Sensor 35 im Bedienpanel 33 detektiert wird. Die übrigen Komponenten der Fahrjoystickanordnung 1 sowie des Bedienpanels 33 können zweckmäßig aus geeigneten Arten von Kunststoff gefertigt sein. In dem Basisgehäuse 3 bzw. einem seiner Seitenteile 3a, 3b kann eine Wasserablauföffnung 44 vorgesehen sein, durch welche in die Fahrjoystickanordnung 1 eingedrungenes Wasser ablaufen kann.

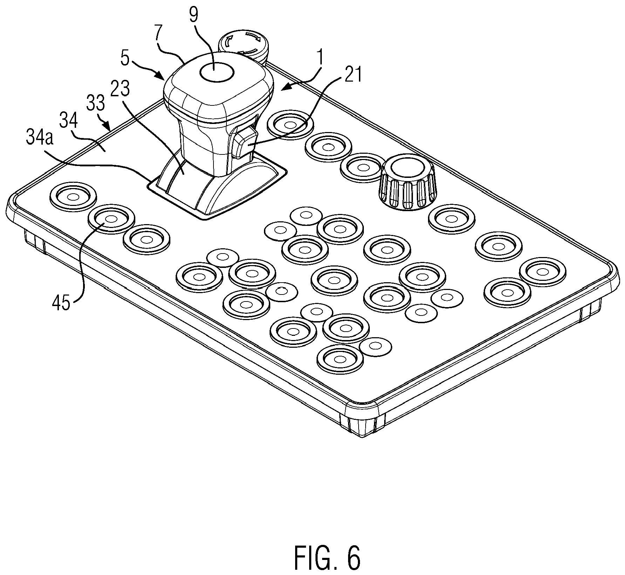

Figur 6 zeigt das Bedienpanel 33 mit Fahrjoystickanordnung 1 und weiteren Bedienelementen 45 zur Steuerung einer Baumaschine. Die Fahrjoystickanordnung 1 ist auf einem Panelgehäuse 34 angeordnet, wobei dieses eine Ausnehmung 34a aufweist, in die die Fahrjoystickanordnung 1 zumindest teilweise eingebracht ist. Diese Ausnehmung kann dabei ein tiefgezogener, d.h. abgesenkter, Bereich des Panelgehäuses 34 sein, so dass weiterhin keine Verbindung zu einem Innenraum 32, welcher die elektronischen Komponenten des Bedienpanels 33 beherbergt, besteht. Ebenso ist es jedoch auch denkbar, das Panelgehäuse 34 als zweite Hülle vorzusehen, so dass beispielsweise die Fahrjoystickanordnung 1 von unten in das Panelgehäuse 34 eingepasst wird, und beide Teile sodann auf einen dritten, wasserdicht gekapselten Teil, welcher die elektronischen Bauteile enthält, gesetzt wird. Der Bedienhebel 5 befindet sich in dieser Darstellung in einer mittigen Nullposition, was einem Anhalten bzw. einer Parkposition der Baumaschine entspricht. Das Bedienpanel 33 kann in einer Vielzahl von Gestaltungsvarianten gefertigt sein, und beispielsweise auch Anzeigeelemente, wie Flüssigkristallbildschirme, sowie mehrere Fahrjoystickanordnungen 1 aufweisen.

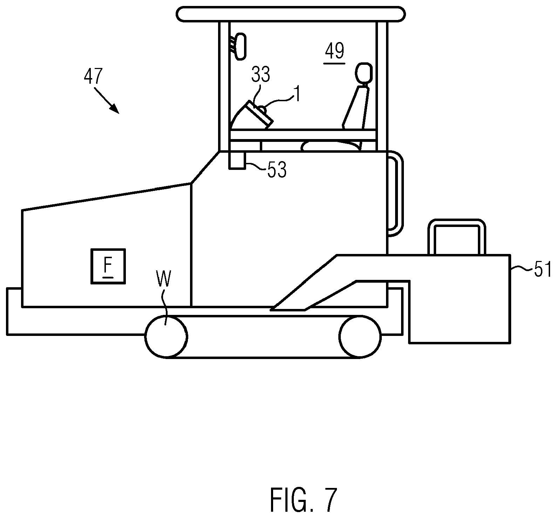

Figur 7 zeigt eine schematische Ansicht einer Baumaschine 47 in Form eines Straßenfertigers mit Bedienpanel 33 mit Fahrjoystickanordnung 1 zum Ansteuern eines Fahrantriebs F. Das Bedienpanel 33 ist hier auf einem Hauptbedienstand 49 angeordnet, kann jedoch auch an einer Einbaubohle 51 oder einem Bedienstand an der Einbaubohle 51 angebracht sein. Die Baumaschine 47 umfasst eine elektronische Steuerung 53, welche die elektrischen Signale des Hall-Sensors 35 des Bedienpanels 33 empfängt und entsprechende Komponenten der Baumaschine 47, wie beispielsweise einen Hauptantrieb F für ein Fahrwerk W, steuert. Der Hauptantrieb kann zum Beispiel ein Dieselmotor sein und die Steuerung 53 kann die Drehzahl und den eingelegten Gang entsprechend steuern.

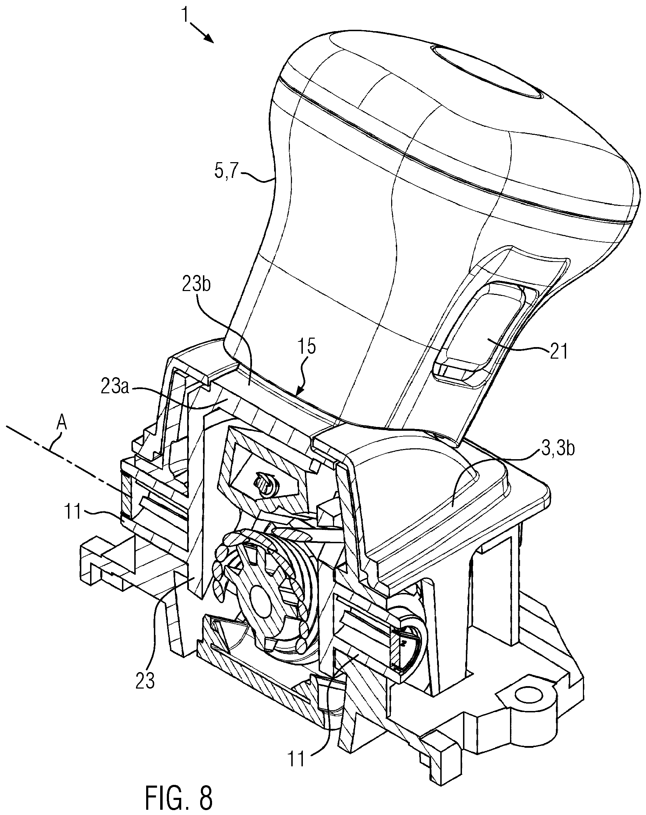

Figur 8 zeigt eine weitere teilgeschnittene, perspektivische Ansicht der Fahrjoystickanordnung mit dem Bedienhebel 5. Der Entriegelungsknopf 21 ist hierbei in seiner nach innen gedrückten, betätigten Stellung; der Bedienhebel 5 ist aus der Nullstellung N um die Achse A nach vorne verschwenkt worden.

In Figur 8 wird ersichtlich, dass der innere Abschnitt 23 des Bedienhebels 5 einen nach außen ragenden Vorsprung 23a aufweist, der in die offene Schaltkulisse 15 hineinragt und bis auf einen minimalen seitlichen Spalt von weniger als 2 mm nahezu dieselbe Breite wie die Schaltkulisse 15 aufweist. Die äußere Oberfläche 23b des Vorsprungs 23a ist eben und entweder flächenbündig mit den benachbarten Bereichen des Basisgehäuses 3 oder minimal (hier um ca. 2 mm nach innen) relativ zu den benachbarten Bereichen des Basisgehäuses 3 versetzt.

Ausgehend von den oben dargestellten Ausführungsformen einer Fahrjoystickanordnung 1 sind vielerlei Variationen derselben möglich. So ist es beispielsweise möglich, ein Raster bzw. eine Struktur an der Innenseite des Basisgehäuses 3 vorzusehen, an welcher der Bedienhebel 5 entlang schleift, z.B. auch in Verbindung mit der Reibbremse 40, so dass diskrete Hebelstellungen wiederholbar einstellbar sind. So können beispielsweise bestimmte Fahrgeschwindigkeiten exakt erneut gewählt werden. Dazu kann das Raster oder die Struktur so ausgebildet sein, dass nur diskret von einer Einraststufe zur nächsten verstellt werden kann, oder es kann auch eine kontinuierliche Verstellung ohne Raster vorgesehen sein, und nur einzelne, voneinander beabstandete Werte sind durch ein Einrasten spürbar. Des Weiteren können vielerlei Designvarianten gewählt werden. Dazu kann die Kappe 7 auch anstatt mittels Schraubverbindung beispielsweise durch eine Steckverbindung, mit Arretierung durch einen Vorsprung, lösbar angebracht sein. Dieselbe Joystickanordnung kann auch zum Bedienen oder Ansteuern anderer Aggregate der Baumaschine als dem Fahrantrieb konfiguriert und verbunden sein; in diesem Fall würde sie einfach als "Joystickanordnung" bezeichnet werden.

## Patentansprüche

1. Fahrjoystickanordnung (1) für eine Baumaschine (47), umfassend einen Bedienhebel (5) und ein Basisgehäuse (3), wobei der Bedienhebel (5) schwenkbar in dem Basisgehäuse (3) gelagert ist, und das Basisgehäuse (3) eine Schaltkulisse (15) aufweist, durch welche sich der Bedienhebel (5) erstreckt, **dadurch gekennzeichnet, dass** der Bedienhebel (5) zumindest abschnittsweise ein Material (43) aufweist, welches dazu geeignet und derart in dem Bedienhebel (5) angeordnet ist, dass eine Stellung des Bedienhebels (5) relativ zum Basisgehäuse (3) mittels eines Hall-Sensors (35) detektierbar ist.

2. Fahrjoystickanordnung nach Anspruch 1, **dadurch gekennzeichnet, dass** der Bedienhebel (5) ein ferromagnetisches und/oder magnetisches Material (43) aufweist.

3. Fahrjoystickanordnung nach einem der vorangegangenen Ansprüche, **dadurch gekennzeichnet, dass** der Bedienhebel (5) von einer Nullposition (N) zu zwei Seiten hin schwenkbar ist.

4. Fahrjoystickanordnung nach einem der vorangegangenen Ansprüche, **dadurch gekennzeichnet**, einen Verriegelungsmechanismus (25) aufzuweisen, welcher eine Bewegung des Bedienhebels (5) aus einer Nullposition (N) heraus oder über diese hinweg verhindert, und der Bedienhebel (5) einen Entriegelungsknopf (21) aufweist, mittels welchem der Verriegelungsmechanismus (25) entriegelbar ist.

5. Fahrjoystickanordnung nach einem der vorangegangenen Ansprüche, **dadurch gekennzeichnet, dass** der Bedienhebel (5) einen Vorsprung (37) und das Basisgehäuse (3) eine Nut (39) aufweist oder umgekehrt, so dass beide in einer Nullposition (N) des Bedienhebels (5) in Eingriff kommen, und ein Bewegen des Bedienhebels (5) aus der Nullposition (N) oder über diese hinweg gegen einen mechanischen Widerstand erfolgt.

6. Fahrjoystickanordnung nach einem der vorangegangenen Ansprüche, **gekennzeichnet durch** eine Reibbremse (40), welche die jeweilige Position des Bedienhebels (5) arretiert.

7. Fahrjoystickanordnung nach einem der vorangegangenen Ansprüche, **dadurch gekennzeichnet, dass** der Bedienhebel (5) austauschbar ist.

8. Fahrjoystickanordnung nach einem der vorangegangenen Ansprüche, **gekennzeichnet durch** eine Öffnung (44), welche den Abfluss von in die Fahrjoystickanordnung (1) eingedrungenem Wasser ermöglicht.

9. Fahrjoystickanordnung nach einem der vorangegangenen Ansprüche, **dadurch gekennzeichnet, dass** das Basisgehäuse (3) einen kreisbogenförmigen, die Schaltkulisse (15) umgebenden Abschnitt (17) aufweist und der Bedienhebel (5) einen die Schaltkulisse (15) zumindest teilweise überlappenden oberen Teil (7) aufweist, welcher einen entsprechenden kreisbogenförmigen Abschnitt (19) aufweist.

10. Fahrjoystickanordnung nach einem der vorangegangenen Ansprüche, **dadurch gekennzeichnet, dass** ein sich innerhalb des Basisgehäuses (3) erstreckender Abschnitt (23) des Bedienhebels (5) derart geformt ist, um an der Schaltkulisse (15) von unten anzuliegen und diese in jeder Stellung des Bedienhebels (5) von unten abzudecken.

11. Bedienpanel (33), umfassend ein Panelgehäuse (34) und eine auf dem Panelgehäuse (34) angeordnete Fahrjoystickanordnung (1) nach einem der vorangegangenen Ansprüche, **dadurch gekennzeichnet, dass** das Panelgehäuse (34) in einem Innenraum (32) den Hall-Sensor (35) aufweist, welcher dazu konfiguriert ist, die Stellung des Bedienhebels (5) der Fahrjoystickanordnung (1) berührungslos zu erfassen.

12. Bedienpanel nach Anspruch 11, **dadurch gekennzeichnet, dass** die Fahrjoystickanordnung (1) an dem Panelgehäuse (34) austauschbar, insbesondere anschraubbar, ein- oder aufsteckbar, ist.

13. Bedienpanel nach Anspruch 11 oder 12, **gekennzeichnet durch** eine Ausnehmung (34a) an/in dem Panelgehäuse (34), in welche die Fahrjoystickanordnung (1) zumindest teilweise positionierbar ist.

14. Baumaschine (47), umfassend eine elektronische Steuerung (53) und ein Bedienpanel (33) nach einem der Ansprüche 11 bis 13, **dadurch gekennzeichnet, dass** der Hall-Sensor (35) des Bedienpanels (33) elektrische Signale in Abhängigkeit der erfassten Stellung des Bedienhebels (5) an die elektronische Steuerung (53) sendet, und die elektronische Steuerung (35) dazu konfiguriert ist, Funktionen der Baumaschine (47), insbesondere eine Fahrrichtung und eine Fahrgeschwindigkeit, in Abhängigkeit der von dem Hall-Sensor (35) erhaltenen Signale zu steuern.

15. Baumaschine nach Anspruch 14, wobei die Baumaschine (47) ein Straßenfertiger oder Beschickerfahrzeug ist.
